# FASCICULE DE BREVET EUROPEEN

(11) **EP 0 755 621 B1**
(45) Date de publication et mention de la délivrance du brevet: **14.03.2001**
(21) Numéro de dépôt: 96401684.4
(22) Date de dépôt: 26.07.1996
(51) Int. Cl.: A01B 73/00

(54) **Engin de ramassage de produits de récolte de type repliable**
Klappbare Erntegutaufnahmevorrichtung
Foldable crop-collecting device

(30) Priorité: 28.07.1995 FR 9509216
(43) Date de publication de la demande: 29.01.1997
(73) Titulaire: SOCIETE IDASS Société à Responsabilité Limitée, 45140 Ormes (FR)
(72) Inventeur: Pinsard, Jacques, 17400 St. Jean d'Angely (FR); Coisnon, René, 45480 Outarville (FR)
(74) Mandataire: Bruder, Michel

(56) Documents cités:
- EP-A- 0 131 853
- EP-A- 0 373 406
- DE-A- 1 507 174
- DE-A- 4 030 066
- DE-U- 8 534 520
- DE-U- 8 535 733
- FR-A- 1 425 849
- FR-A- 2 685 162
- US-A- 2 706 032
- US-A- 2 815 852
- US-A- 4 409 780

## Description

La présente invention concerne un "pick-up", c'est-à-dire un engin de ramassage destiné à collecter les andains formés par les faucheuses sur les sols de culture. Elle concerne plus particulièrement un pick-up de type repliable.

De tels engins sont habituellement disposés sur l'avant d'une ensileuse automotrice et sont essentiellement constitués d'un ramasseur, qui récolte les andains sur le sol pour les amener à une vis sans fin qui les récupère et les rassemble pour les évacuer ensuite dans l'ensileuse.

On comprend aisément que, pour des raisons de rendement, il est intéressant que les pick-up possèdent une envergure, ou largeur active, importante. En cours de travail, cette largeur n'empêche pas une manoeuvre aisée de l'engin, dans la mesure, bien entendu, où les lieux d'utilisation ont une surface suffisamment vaste.

Par contre, les règlements en matière de sécurité routière imposent à ces engins, lorsqu'ils doivent se déplacer sur route, une largeur réduite telle qu'elle nécessite, soit un démontage soit un repliage du pick-up. Le démontage du pick-up étant une opération longue et fastidieuse, on a ainsi proposé dans la technique antérieure des moyens permettant de réaliser un pick-up constitué d'éléments repliables.

On connaît ainsi, par la demande de brevet EP-A-0 373 406, un type de pick-up dans lequel la vis sans fin est formée de deux éléments repliables de longueurs inégales, à savoir un élément qui, en position de transport, est replié à l'horizontale au-dessus de l'autre élément, ce dernier subissant lui-même un déplacement transversal pour le ramener vers le centre de l'engin. La largeur active d'un tel pick-up se trouve ainsi limitée, de construction, au double de la largeur autorisée sur route de ce type d'engin.

La présente invention a pour but de remédier aux inconvénients des engins ramasseurs de la technique antérieure en proposant un pick-up dont les éléments actifs, c'est-à-dire notamment le ramasseur et la vis sans fin, sont réalisés en deux éléments repliables, ces deux éléments étant aptes, en position de transport, à être disposés verticalement et latéralement sur la face avant de l'engin, de façon à dégager la cabine du conducteur.

La présente invention a ainsi pour objet un engin agricole destiné à la récolte et/ou au ramassage de produits de récolte sur le sol, du type comportant au moins un élément actif transversal et rotatif constitué de deux parties repliables, aptes à occuper deux positions, à savoir une position de travail dans laquelle les parties sont disposées dans le prolongement axial l'une de l'autre et transversalement par rapport à la direction de déplacement de l'engin, et une position de repos dans laquelle les deux parties sont repliées, caractérisé en ce que, les deux parties de l'élément actif comportent des moyens aptes à assurer leur positionnement axial l'une par rapport à l'autre, et des moyens d'actionnement aptes à exercer, en position de travail, un effort de traction axial et longitudinal les appliquant l'une contre l'autre, de façon à les maintenir solidarisées l'une de l'autre.

Un avantage essentiel de la présente invention est qu'elle permet de réaliser des pick-up dont la largeur active, est limitée uniquement par les problèmes de résistance mécanique et la limitation en hauteur des engins, mais non par leur largeur maximale autorisée sur route, ce qui permet de réaliser des pick-up de plus grande efficacité.

Dans un mode de mise en oeuvre de l'invention les moyens de positionnement axial sont constitués d'un bossage tronconique, disposé sur l'extrémité interne de l'une desdites parties, qui est destiné à prendre place dans une cavité de forme complémentaire réalisée à l'extrémité interne de l'autre partie. L'engin peut également comporter des moyens aptes à écarter transversalement les deux parties l'une de l'autre, lorsque l'on passe de la position de travail à la position de repos. Cet écartement peut être obtenu en faisant réaliser à l'une des parties de l'élément actif, un mouvement de translation transversale vers l'extérieur lorsque l'on passe de la position de travail à la position de repos.

Dans un mode de mise en oeuvre de l'invention, l'engin comporte des moyens aptes à faire effectuer à chaque partie de l'élément actif un mouvement de pivotement vers le haut, tel qu'en position de repos, les deux parties de l'élément actif soient sensiblement verticales et disposées latéralement sur sa face avant. Un autre avantage de ce mode de mise en oeuvre est, qu'en position de repos, les éléments actifs ne gênent en rien le champ de vision qui s'offre au conducteur de l'engin.

Dans une variante de mise en oeuvre de l'invention l'extrémité interne de l'une des parties de l'élément actif se termine par des moyens de préhension aptes à saisir, en position de travail, l'extrémité interne de l'autre partie de l'élément actif et à exercer sur celle-ci un effort de traction axiale, de façon à assurer la solidarisation des deux dites parties. Chaque partie de l'élément actif peut être creuse, au moins à son extrémité externe et comporter un premier élément cylindrique tubulaire axial solidaire, à son extrémité interne, d'un flasque solidaire de celle-ci qui est enfilé dans des roulements maintenus par un second élément tubulaire de plus grand diamètre dont l'extrémité externe est solidaire d'un élément de châssis assurant le maintien de l'élément actif.

On décrira ci-après, à titre d'exemple non limitatif, une forme d'exécution de la présente invention, en référence aux dessins annexés sur lesquels :

La figure 1 est une vue schématique frontale d'un engin de ramassage suivant l'invention en position de travail.

La figure 2 est une vue schématique frontale de l'engin représenté sur la figure 1 au cours de la première étape de son opération de repliage.

La figure 3 est une vue schématique frontale de l'engin représenté sur les figures 1 et 2 au cours de la seconde étape de son opération de repliage.

La figure 4 est une vue schématique frontale de l'engin de ramassage représenté sur les figures 1 à 3 en position de transport.

La figure 5 est une vue en perspective éclatée de l'engin de ramassage suivant l'invention représenté sur les figures 1 à 4.

La figure 6 est une vue schématique en coupe partielle transversale illustrant les moyens de maintien des deux éléments formant la vis sans fin, en position de travail.

La figure 7 est une vue schématique en coupe partielle transversale du dispositif représenté sur la figure 6, en position de relâchement des deux éléments de vis sans fin.

La figure 8 est une vue en coupe transversale partielle agrandie du dispositif assurant, en position de travail, le maintien des deux éléments constituant la vis sans fin.

La figure 9 est une vue schématique en coupe transversale d'une variante des modes de mise en oeuvre représentés sur les figures 6 et 7.

La figure 10 est une vue frontale partielle des moyens permettant d'assurer le déplacement transversal de l'axe de pivotement de l'élément de châssis assurant le maintien d'un élément de vis sans fin et d'un élément de ramasseur.

La figure 11 est une vue en coupe du dispositif représenté sur la figure 10 suivant la ligne XI-XI de celui-ci.

La figure 12 est une vue schématique en coupe transversale d'une variante de mise en oeuvre de l'invention destinée à assurer, en position de travail, le maintien des deux éléments constituant la vis sans fin.

La figure 13 est une vue schématique frontale partielle représentant les deux éléments de châssis et leurs deux éléments de vis sans fin et de ramasseur respectifs, ainsi que les moyens de commande de déplacement transversal de l'axe de l'élément de châssis mobile.

La figure 14 est une vue schématique partielle en perspective représentant le mode de solidarisation, en position de travail, des deux éléments constituant le ramasseur.

La figure 15 est une vue schématique en coupe transversale du dispositif représenté sur la figure 14.

La figure 16 est une vue en coupe partielle représentant un mode de fixation des deux parties de l'élément actif de l'engin agricole suivant l'invention.

Les figures 17 et 18 sont des représentations schématiques d'un mode de fixation manuel des deux parties de l'élément actif respectivement en position de déverrouillage et en position de verrouillage.

L'engin de ramassage 1, ou pick-up, représenté sur les figures est destiné à être fixé sur la partie frontale d'une ensileuse automotrice 2. A cet effet, la partie frontale de celle-ci est constituée d'un cadre support 3 comportant quatre axes de fixation 5, filetés à leur extrémité, sur lesquels vient se fixer un cadre 7 solidaire de l'engin suivant l'invention. Pour cela le cadre 7 du pick-up comporte quatre plaques percées de trous 6 qui reçoivent les axes filetés 5. Le cadre 7 assure le maintien d'un ensemble comprenant essentiellement un ramasseur 9 et un élément actif constitué ici d'une vis sans fin 11. Le ramasseur 9 et la vis sans fin 11 s'étendent sur la largeur totale l de l'engin et collectent les andains qui reposent sur le sol pour les amener au centre de l'appareil afin de les délivrer à des moyens collecteurs 13 de l'ensileuse automotrice 2.

Le ramasseur 9 et la vis sans fin 11 sont constitués de deux éléments, d'une part deux éléments de ramasseur 9a et 9b et, d'autre part, deux éléments de vis sans fin 11a et 11b, qui sont maintenus par deux éléments de châssis 8a et 8b. Les deux éléments de châssis 8a et 8b sont constitués de montants latéraux internes 28a et 28b et de montants latéraux externes 33a et 33b qui sont réunis à leur base par des longerons transversaux non représentés sur le dessin. Des éléments de tôle 34a et 34b, perforés à leur partie supérieure, sont disposés sous les éléments de vis sans fin 11a et 11b et remontent sur la partie arrière des éléments de châssis 8a et 8b, de façon à constituer une goulotte dans laquelle se déplacent les andains collectés, sous l'effet de la rotation de la vis sans fin 11. Les deux éléments de châssis 8a et 8b sont montés à pivotement sur le cadre 7 autour d'axes 15a et 15b proches du plan de symétrie longitudinal de l'engin et disposés à la partie supérieure du cadre 7.

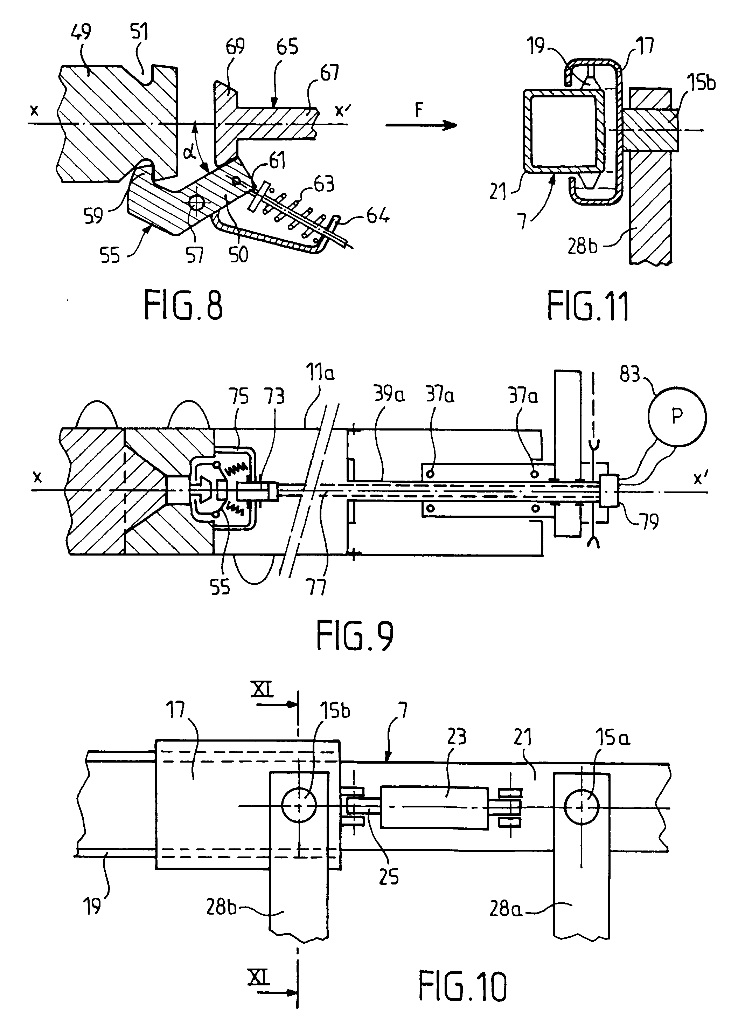

Ainsi que représenté, notamment sur les figures 10 et 11, l'axe 15b est solidaire d'un chariot 17 monté à coulissement sur une glissière 19 solidaire du montant supérieur 21 du cadre 7. Le déplacement de ce chariot est commandé par un vérin 23 dont le corps prend appui sur le montant 21 et le piston 25 est monté articulé sur le chariot 17. Les montants latéraux internes 28a et 28b des éléments de châssis 8a et 8b sont respectivement montés à pivotement sur les axes 15a et 15b. Des montants latéraux 27a et 27b du cadre 7 reçoivent à leur partie inférieure un corps de vérin 29a et 29b dont les pistons respectifs 31a et 31b sont fixés sur les éléments de châssis 8a et 8b de façon à commander leur pivotement autour des axes 15a et 15b.

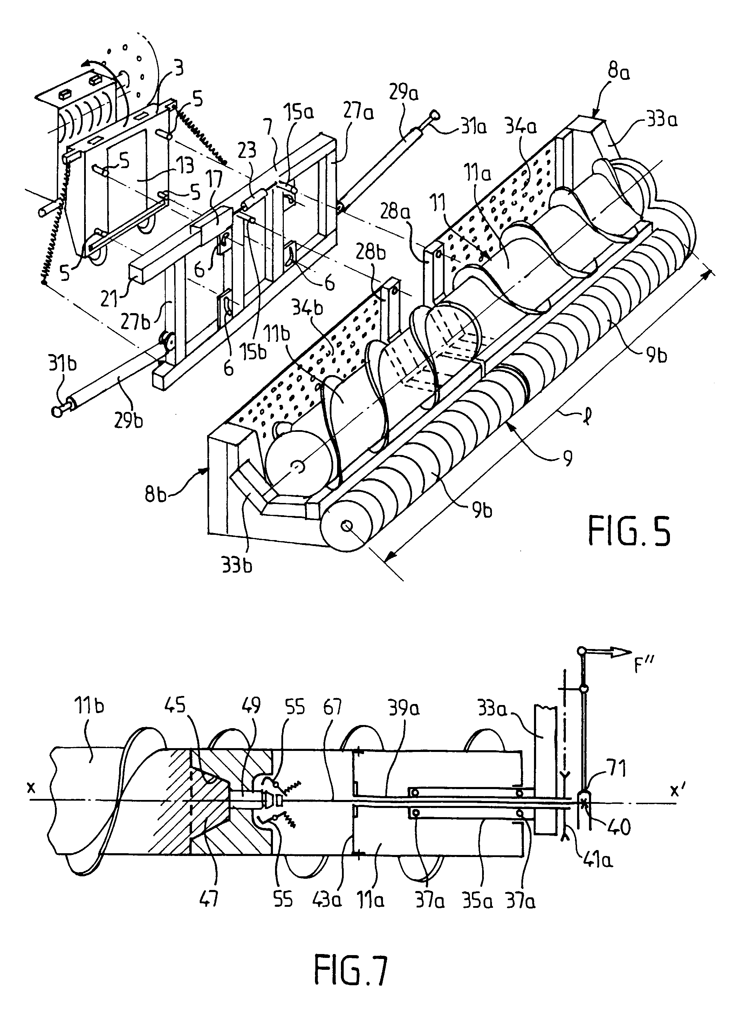

Ainsi que représenté sur les figures 5, 6 et 7, chaque extrémité externe respective de la vis sans fin 11 est maintenue par les montants 33a,33b des éléments de châssis 8a et 8b. A cet effet, les montants 33a et 33b se terminent à leurs parties inférieures respectives par un support cylindrique tubulaire transversal 35a et 35b qui s'étend à l'intérieur des éléments de vis sans fin 11a et 11b. Chaque support cylindrique tubulaire 35a et 35b comporte, à chacune de ses extrémités, un roulement 37a et 37b au centre duquel est ajusté un arbre creux 39a et 39b dont l'extrémité externe à l'élément de vis sans fin 11a et 11b comporte une poulie 41a et 41b, et l'autre extrémité est maintenue par une entretoise diamétrale 43a et 43b respectivement solidaire de la partie interne de l'élément de vis sans fin 11a et 11b. Dans ces conditions, les éléments de vis sans fin 11a et 11b sont maintenus par les montants 33a et 33b et peuvent être entraînés en rotation autour de leur axe longitudinal xx' par les poulies 41a et 41b.

L'élément de vis sans fin 11a comporte, à son extrémité interne, une cavité tronconique 45 destinée à recevoir un bossage tronconique 47, de dimensions et de forme complémentaire prévu à l'extrémité de l'élément de vis sans fin 11b, de façon à assurer un guidage et un maintien axial des deux éléments de vis sans fin 11a et 11b.

L'engin suivant l'invention, comporte des moyens permettant d'assurer une solidarisation des deux éléments de vis sans fin 11a et 11b, sans pour autant avoir recours à des supports externes à cette vis sans fin 11 qui risqueraient de provoquer, au niveau de celle-ci, un bourrage des andains. Le dispositif de maintien des deux éléments de vis sans fin 11a et 11b est disposé en totalité à l'intérieur de l'élément de vis sans fin 11a.

Un tel dispositif, représenté en détail sur la figure 8, est essentiellement constitué d'un téton axial 49 qui prolonge le bossage tronconique 47, et dont l'extrémité est creusée d'une gorge circulaire 51, ce téton s'engageant à l'intérieur d'un orifice axial cylindrique 52 creusé dans la partie extrême interne de l'élément de vis sans fin 11a. Le dispositif comprend également trois griffes 55 disposées à 120°, dont une seule est représentée sur la figure 8, qui sont montées à rotation autour d'axes respectifs 57 et qui sont formées de deux branches, une première branche 59 formant un crochet susceptible de prendre place dans la gorge 51 du téton 49 et une seconde branche 50 formant, en position de serrage, un angle α d'environ 45° avec l'axe xx' de la vis sans fin 11, et à l'extrémité de laquelle est articulé un piston 61 sollicité par un ressort de compression 63 et qui, à cet effet, prend appui à l'une de ses extrémités sur une plaquette 64 solidaire du châssis 8a, si bien que le ressort 63 sollicite les griffes 55 de façon à maintenir les crochets 59 en dehors de la gorge 51. Un piston de commande 65, qui comprend une tige 67 et une tête de piston 69, dont le chant est incliné de l'angle α par rapport à l'axe xx', vient en appui sur les branches 50 des griffes 55, et permet, lorsque la tige de piston 67 est sollicitée vers l'extérieur dans le sens de la flèche F, de refermer les griffes 55, de façon que les crochets 59 prennent place dans la gorge 51 et exercent sur le téton 49 un effort longitudinal dirigé dans le sens de la force F, effort qui assure le maintien longitudinal des deux éléments de vis sans fin 11a et 11b.

La tige de piston 67 traverse l'élément de vis sans fin 11a, et plus précisément l'arbre creux 39a, pour sortir de celui-ci et se terminer par une butée à bille 40 permettant d'assurer une sollicitation F tout en permettant une rotation de la vis sans fin 11. Cette sollicitation peut être exercée notamment par un système bien connu de fourche 71 à l'extrémité de laquelle on applique une force dans le sens de la flèche Q, par exemple à l'aide d'un vérin hydraulique 72.

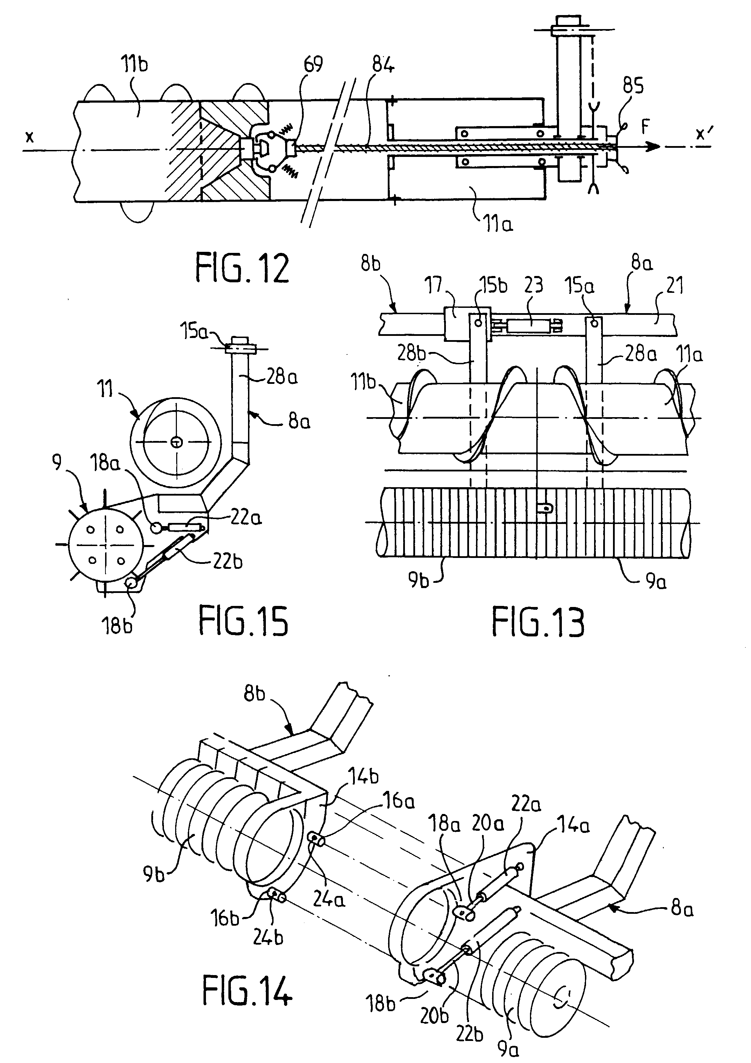

Ainsi que représenté sur les figures 14 et 15, le ramasseur 9 est également constitué d'un élément de ramasseur 9a et d'un élément de ramasseur 9b. Ces éléments de ramasseur sont maintenus par les éléments de châssis 8a et 8b. Chaque élément 9a, 9b du ramasseur 9 se termine, en partie centrale de la machine, par deux platines 14a et 14b qui sont pourvues de moyens permettant de les verrouiller ensemble lors du travail de l'engin. Ces moyens sont constitués de deux tétons 16a et 16b, disposés sur la platine 14a qui comporte une partie frontale tronconique qui assure leur guidage dans des cavités correspondantes prévues dans des bossages 18a et 18b de la platine 14a. Les tétons 16a et 16b sont pourvus de trous radiaux 24a et 24b destinés à accueillir, en position de verrouillage, des broches transversales disposées en extrémité de pistons 20a et 20b de vérins hydrauliques 22a et 22b. En position de verrouillage, les tétons 16a et 16b prennent place dans les cavités des bossages 18a et 18b, puis l'on active les vérins hydrauliques 22a et 22b de façon que les broches disposées en extrémité de leurs pistons 20a et 20b pénètrent dans les trous radiaux de leurs tétons 16a et 16b à la façon de clavettes, ce qui assure un verrouillage de ces éléments. Dans ces conditions, le fonctionnement de l'engin de ramassage suivant l'invention s'effectue de la façon décrite ci-après.

En position de travail, les vérins de relevage 29a et 29b sont en position rétractée, si bien que les deux éléments de châssis 8a et 8b sont alignés transversalement ainsi donc que les éléments de vis sans fin 11a et 11b et les éléments de ramasseur 9a et 9b. Par ailleurs, le vérin 72 exerce, sur la fourche 71, une force de traction dans la direction de la flèche Q qui se traduit sur la butée à bille 40, prévue en bout de la tige 67, par un effort suivant la flèche F, si bien que la tête 69 du piston 65, exerce, par l'intermédiaire des griffes 55, un effort de traction sur le téton 49 et, en conséquence, sur l'élément de vis sans fin 11b. Cet effort assure une parfaite solidarisation des deux éléments de vis sans fin 11a et 11b pendant toute la durée du travail. Parallèlement, les tétons 16a et 16b de l'élément de ramasseur 9b sont verrouillés dans les bossages 18a et 18b de la platine 14a par les broches formant clavettes disposées en bout des pistons 20a et 20b des vérins 22a et 22b.

Lorsque le travail est terminé et que l'on souhaite replier les éléments actifs de l'engin, à savoir les deux éléments du ramasseur 9a et 9b et les deux éléments de vis sans fin 11a et 11b, on sort la tige de piston du vérin 72 (déplacement en sens inverse de la flèche Q), ce qui a pour effet de repousser la tête 69 du piston 65 vers le téton 49, de façon à libérer les griffes 55 qui, sous l'action des ressorts de compression 63, pivotent autour de leurs axes 57 de façon que les crochets 59 des griffes 55 sortent de la gorge 51 et libèrent le téton 49, ce qui a pour effet de désolidariser les deux éléments de vis sans fin 11a. Parallèlement, on rétracte les pistons des vérins 22a et 22b, ce qui a pour effet de libérer les tétons 16a et 16b de façon à désolidariser les deux éléments de ramasseur 9a et 9b.

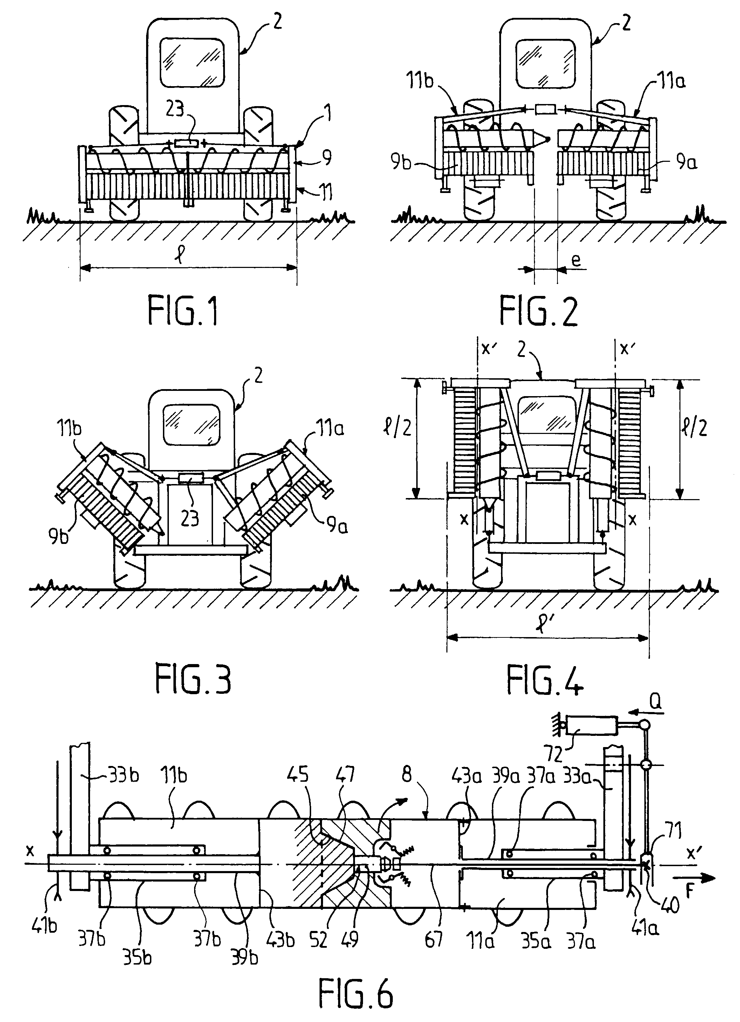

On déplace ensuite le chariot 17 sur la glissière 19 vers l'extérieur en déployant le piston 25 du vérin 23, ce qui a pour effet de déplacer l'axe de pivotement 15b de l'élément de châssis 8b vers la gauche d'une distance e sur les figures, si bien que le bossage tronconique 47 de l'élément de vis sans fin 11b sort de la cavité tronconique 45 de l'élément de vis sans fin 11a. On déploie ensuite les pistons 31a et 31b des vérins 29a et 29b, de façon que ceux-ci repoussent vers le haut les bases externes des éléments de châssis 8a et 8b et que ceux-ci pivotent alors autour de leurs axes respectifs 15a et 15b (Cf. figure 3) jusqu'à ce que les axes longitudinaux xx' de chacun des éléments de vis sans fin 11a et 11b soient positionnés sensiblement verticalement et latéralement sur la face avant de l'engin.

Les éléments de châssis 8a et 8b sont maintenus dans cette position par le blocage des vérins 29a et 29b. L'engin, maintenu sur l'ensileuse automotrice 1 possède alors une largeur l' qui est celle de l'ensileuse automotrice 2 sur laquelle elle est fixée, si bien que sa largeur n'est plus un obstacle aux règles de circulation sur route de ce type d'engins. Dans cette position, les éléments de châssis 8a et 8b ne gênent pas la vue du conducteur de l'ensileuse.

On peut bien entendu, pour assurer la traction axiale sur la tige 67 qui est nécessaire pour assurer la solidarisation des éléments de vis sans fin 11a et 11b, faire appel à tout autre moyen que celui décrit précédemment.

On peut ainsi, comme représenté sur la figure 9, remplacer la tige de traction 67 par des moyens hydrauliques. On utilise ainsi un vérin hydraulique 73, dont le corps est solidarisé de la face interne de l'élément de la vis sans fin 11a par un support 75, et dont la tête de piston a une forme identique à celle de la tête 69. Le vérin hydraulique 73 est alimenté par une canalisation 77 qui traverse l'arbre creux 39a pour sortir de celui-ci par l'intermédiaire d'un joint tournant hydraulique 79 alimenté par une source hydraulique de pression externe 83. En rétractant le piston du vérin 73 la tête de celui-ci fait pivoter les griffes 55 qui prennent place dans la gorge 51 du téton 49. A l'inverse, en repoussant le piston du vérin 73 on ouvre les crochets des griffes 55 et on libère l'élément de vis sans fin 8b.

On pourrait également utiliser, à la place du vérin hydraulique 73, un vérin électrique et, dans ce cas, la canalisation hydraulique 77 serait alors remplacée par des câbles d'alimentation électriques se terminant par un joint tournant électrique de type contacteur rotatif à balais.

On pourrait enfin, ainsi que représenté sur la figure 12, faire appel à des moyens mécaniques de commande constitués d'une vis sans fin 84 pourvue à son extrémité interne d'une tête de commande du type de la tête 69 et recevant à son extrémité externe un volant d'actionnement 85 au moyen duquel on applique la force de traction souhaitée F à l'élément de vis sans fin 11b.

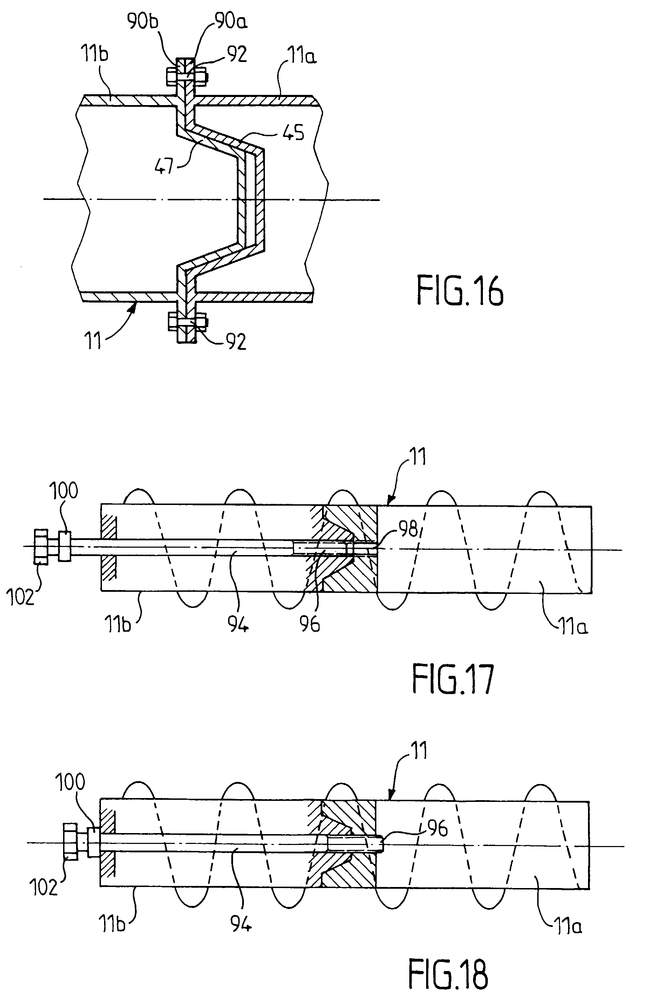

La fixation des deux parties 11a et 11b de l'élément actif 11 peut également être réalisée par des modes de fixation manuels. Ainsi, comme représenté sur la figure 16 chaque partie 11a,11b peut être pourvue d'une collerette circulaire externe 90a,90b, ces collerettes, étant maintenues appliquées l'une contre l'autre, en position de fonctionnement, par six boulons 92 qui sont répartis régulièrement sur leur périphérie.

On peut également, ainsi que représenté sur les figures 17 et 18 assurer la fixation des deux parties 11a et 11b de l'élément actif 11 au moyen d'une broche centrale 94 qui comporte à son extrémité une partie filetée 96 et qui traverse la partie 11b pourvue d'un élément de centrage tronconique et qui vient se visser dans la partie 11a qui, à cet effet est pourvue d'un trou fileté central 98. La broche 94 est pourvue à son autre extrémité d'une butée 100 et d'une manette de commande 102. Pour assurer la solidarisation des parties 11a et 11b en exerçant sur celles-ci un effort axial on visse la broche 94, ainsi que représenté sur la figure 18, dans le trou fileté 98 de la partie 11a jusqu'à ce que la butée 100 de ladite broche vienne en contact avec la partie 11b. Dans ces conditions on comprend que la broche de fixation 94 agit comme une vis de serrage.

Bien entendu, les moyens de repliage suivant l'invention peuvent être mis en oeuvre sur des machines autres que des pick-up et notamment sur des cueilleurs, tels que des cueilleurs de maïs, des cueilleurs de tournesol etc...

Bien que l'engin précédemment décrit possède un élément actif unique, il pourrait cependant bien entendu comprendre plusieurs éléments actifs de même type ou non. Il pourrait également être constitué de tout autre type d'élément actif et notamment d'un ramasseur.

## Revendications

1. Engin agricole destiné à la récolte et/ou au ramassage de produits de récolte sur le sol, du type comportant au moins un élément actif (11) transversal et rotatif constitué de deux parties (11a,11b) repliables, aptes à occuper deux positions, à savoir une position de travail dans laquelle les parties (11a,11b) sont disposées dans le prolongement axial l'une de l'autre et transversalement par rapport à la direction de déplacement de l'engin, et une position de repos dans laquelle les deux parties (11a,11b) sont repliées, caractérisé en ce que, les deux parties (11a,11b) de l'élément actif (11) comportent des moyens (45,47) aptes à assurer leur positionnement axial l'une par rapport à l'autre, et des moyens d'actionnement (55,67,71,72,92) aptes à exercer, en position de travail, un effort de traction axial et longitudinal les appliquant l'une contre l'autre, de façon à les maintenir solidarisées l'une de l'autre.

2. Engin suivant la revendication 1 caractérisé en ce que les moyens de positionnement axial sont constitués d'un bossage tronconique (47), disposé sur l'extrémité interne de l'une desdites parties (11b), qui est destiné à prendre place dans une cavité (45) de forme complémentaire réalisée à l'extrémité interne de l'autre partie (11a).

3. Engin suivant l'une des revendications 1 ou 2 caractérisé en ce qu'il comporte des moyens (17,19,23) aptes à écarter transversalement les deux parties (11a,11b) l'une de l'autre, lorsque l'on passe de la position de travail à la position de repos.

4. Engin suivant la revendication 3 caractérisé en ce qu'il comporte des moyens aptes à faire réaliser à l'une des parties de l'élément actif, un mouvement de translation transversale vers l'extérieur lorsque l'on passe de la position de travail à la position de repos.

5. Engin suivant l'une des revendications précédentes caractérisé en ce qu'il comporte des moyens (15a,15b,29a,29b) aptes à faire effectuer à chaque partie (11a,11b) de l'élément actif (11) un mouvement de pivotement vers le haut, tel qu'en position de repos, les deux parties (11a,11b) de l'élément actif (11) soient sensiblement verticales et disposées latéralement sur sa face avant.

6. Engin suivant l'une quelconque des revendications précédentes caractérisé en ce que l'élément actif est constitué d'une vis sans fin (11).

7. Engin suivant l'une quelconque des revendications précédentes caractérisé en ce que l'élément actif est constitué d'un ramasseur.

8. Engin suivant l'une quelconque des revendications précédentes caractérisé en ce que l'extrémité interne de l'une des parties (11a) de l'élément actif (11) se termine par des moyens de préhension (55,65) aptes à saisir, en position de travail, l'extrémité interne (49) de l'autre partie (11b) de l'élément actif (11) et à exercer sur celle-ci un effort de traction axiale, de façon à assurer la solidarisation des deux dites parties (11a,11b).

9. Engin suivant l'une des revendications précédentes caractérisé en ce que chaque partie (11a,11b) de l'élément actif (11) est creuse, au moins à son extrémité externe, et comporte un premier élément cylindrique tubulaire (39a,39b) axial solidaire, à son extrémité interne, d'un flasque (43a,43b) solidaire de celle-ci qui est enfilé dans des roulements (37a,37b) maintenus par un second élément tubulaire (35a,35b) de plus grand diamètre dont l'extrémité externe est solidaire d'un élément de châssis (33a,33b) assurant le maintien de l'élément actif (11).

10. Engin suivant la revendication 9 caractérisé en ce que l'élément de préhension est actionné par des moyens de commande qui traversent le premier élément tubulaire (39a,39b) pour ressortir à une extrémité de l'élément actif (11).

11. Engin suivant la revendication 8 caractérisé en ce que l'effort de traction est assuré par des moyens de commande constitués d'un arbre longitudinal (65) qui traverse la partie (11a) de l'élément actif (11) qui contient les moyens de préhension, et sort de celle-ci par son extrémité externe.

12. Engin suivant la revendication 8 caractérisé en ce que l'extrémité interne d'une partie (11b) de l'élément actif (11) se termine par un téton axial cylindrique (99) pourvu d'une gorge circulaire (51) et les moyens de préhension sont constitués de griffes (55) en deux parties (50,59) montées pivotantes autour d'un axe (57), une partie (59) formant crochet étant apte à s'engager dans la gorge circulaire (51) sous l'action des susdits moyens d'actionnement.

13. Engin suivant la revendication 1 ou 2 caractérisé en ce que chaque partie (11a,11b) de l'élément actif (11) est pourvue d'une collerette externe (90a,90b) comportant des moyens de pression (92), tels que notamment des boulons aptes à appliquer l'une contre l'autre, en position de travail, les deux collerettes (90a,90b).

14. Engin suivant la revendication 1 ou 2 caractérisé en ce que l'une des parties (11b) de l'élément actif (11) comporte une broche (94) pourvue à l'une de ses extrémités d'une partie filetée (96), et à son autre extrémité d'une butée (100), l'autre partie (11a) de l'élément actif (11) étant pourvue d'un orifice fileté destiné à recevoir, en position de verrouillage, la partie filetée (96) de façon à appliquer, dans cette position, la butée (100) contre la partie (11b), de façon à exercer un effort axial maintenant ces deux parties (11a,11b) l'une contre l'autre.

## Patentansprüche

1. Landwirtschaftliches Gerät zum Ernten und/oder Sammeln von auf dem Boden befindlichen Erntegut vom Typ mit mindestens einem in Querrichtung angeordneten, rotierenden aktiven Element (11) aus zwei klappbaren Teilen (11a, 11b), die zwei Positionen einnehmen können, und zwar eine Arbeitsposition, in welcher die Teile (11a, 11b) in axialer Verlängerung zueinander und quer zur Fortbewegungsrichtung des Geräts verlaufen, und eine Ruheposition, in welcher die beiden Teile (11a, 11b) eingeklappt sind, dadurch gekennzeichnet, daß die beiden Teile (11a, 11b) des aktiven Elements (11) Einrichtungen (45, 47) zu ihrer gegenseitigen axialen Positionierung sowie Betätigungseinrichtungen (55, 67, 71, 72, 92) aufweisen, die in der Arbeitsposition eine axiale, in Längsrichtung wirkende Zugkraft ausüben, welche die Teile gegeneinander zur Anlage bringt und in fest miteinander verbundenem Zustand hält.

2. Gerät nach Anspruch 1, dadurch gekennzeichnet, daß die Einrichtungen zur axialen Positionierung einen kegelstumpfförmigen Vorsprung (47) am inneren Ende eines der Teile (11b) zur Aufnahme in einem Hohlraum (45) komplementärer Form am inneren Ende des anderen Teils (11a) enthalten.

3. Gerät nach einem der Ansprüche 1 oder 2, gekennzeichnet durch eine Einrichtung (17, 19, 23) zur Entfernung der beiden Teile (11a, 11b) voneinander in Querrichtung beim Wechsel von der Arbeitsposition in die Ruheposition.

4. Gerät nach Anspruch 3, gekennzeichnet durch eine Einrichtung zur Verschiebung eines der Teile des aktiven Elements in Querrichtung nach außen, beim Wechsel von der Arbeitsposition in die Ruheposition.

5. Gerät nach einem der vorstehenden Ansprüche, gekennzeichnet durch eine Einrichtung (15a, 15b, 29a, 29b), die jedes Teil (11a, 11b) des aktiven Elements (11) nach oben schwenken läßt, derart, daß die beiden Teile (11a, 11b) des aktiven Elements (11) sich in der Ruheposition im wesentlichen senkrecht und seitlich auf seiner Vorderseite des Gerätes befinden.

6. Gerät nach einem der vorstehenden Ansprüche, dadurch gekennzeichnet, daß das aktive Element durch eine Schnecke (11) gebildet wird.

7. Gerät nach einem der vorstehenden Ansprüche, dadurch gekennzeichnet, daß das aktive Element als Sammler ausgebildet ist.

8. Gerät nach einem der vorstehenden Ansprüche, dadurch gekennzeichnet, daß das innere Ende eines der Teile (11a) des aktiven Elements (11) in einem Greifer (55, 65) endet, der in der Arbeitsposition das innere Ende (49) des anderen Teils (11b) des aktiven Elements ergreift und auf dieses einen eine axiale Zugbelastung ausübt, so daß eine feste Verbindung der beiden Teile (11a, 11b) gewährleistet ist.

9. Gerät nach einem der vorstehenden Ansprüche, dadurch gekennzeichnet, daß jedes Teil (11a, 11b) des aktiven Elements (11) zumindest an seinem äußeren Ende hohl ist und ein erstes axiales zylindrisches rohrförmiges Element (39a, 39b) aufweist, das an seinem inneren Ende an einem mit dem betreffenden Teil fest verbundenen Flansch (43a, 43b) angebracht ist und in Wälzlager (37a, 37b) eingesetzt ist, die durch ein zweites rohrförmiges Element (35a, 35b) von größerem Durchmesser gehalten sind, dessen äußeres
Ende mit einem das aktive Element (11) haltendem Rahmenelement (33a, 33b) fest verbunden ist.

10. Gerät nach Anspruch 9, dadurch gekennzeichnet, daß der Greifer durch Steuerelemente betätigt wird, die durch das erste rohrförmige Element (39a, 39b) hindurch verlaufen und an einem Ende des aktiven Elements (11) wieder austreten.

11. Gerät nach Anspruch 8, dadurch gekennzeichnet, daß die Zugbelastung durch eine Betätigungseinrichtung in Form einer in Längsrichtung verlaufenden Welle (65) ausgeübt wird, welche das den Greifer enthaltende Teil (11a) des aktiven Elements (11) durchsetzt und an dessen äußerem Ende austritt.

12. Gerät nach Anspruch 8, dadurch gekennzeichnet, daß das innere Ende des einen Teils (11b) des aktiven Elements (11) in einem axialen zylindrischen Ansatzstück (49) endet, das mit einer ringförmigen Vertiefung (51) versehen ist, und daß der Greifer durch Krallen (55) aus zwei um eine Achse (57) schwenkbar angebrachten Teilen (50, 59) gebildet werden, wobei das eine Teil (59) einen Haken bildet, der unter Einwirkung der Betätigungseinrichtungen in die ringförmige Vertiefung (51) eingreifen kann.

13. Gerät nach Anspruch 1 oder 2, dadurch gekennzeichnet, daß jedes Teil (11a, 11b) des aktiven Elements (11) mit einem Außenflansch (90a, 90b) versehen ist, der eine Zusammendrückeinrichtung (92), wie insbesondere Bolzen, aufweist, die dafür sorgt, daß die beiden Flansche (90a, 90b) in der Arbeitsposition aneinander anliegen.

14. Gerät nach Anspruch 1 oder 2, dadurch gekennzeichnet, daß eines der Teile (11b) des aktiven Elements (11) eine Spindel (94) aufweist, die an einem ihrer Enden ein mit einem Gewinde versehenes Teil (96) und an ihrem anderen Ende einen Anschlag (100) hat, und daß das andere Teil (11a) des aktiven Elements (11) eine Gewindeöffnung aufweist, die in der verriegelten Position das Gewindeteil (96) aufnimmt, so daß der Anschlag (100) sich gegen das Teil (11b) legt und durch axiale Belastung die beiden Teile gegeneinander gehalten werden.

## Claims

1. Agricultural machine intended for harvesting and/or collecting crops from the ground, of the type comprising at least one transverse, rotating, active element (11) constituted by two foldable parts (11a, 11b), adapted to occupy two positions, namely a work position in which parts (11a, 11b) are disposed in axial extension with respect to each other and transversely with respect to the direction of displacement of the machine, and a rest position in which the two parts (11a, 11b) are folded, characterized in that the two parts (11a, 11b) of the active element (11) comprise means (45, 47) adapted to ensure their axial positioning with respect to each other, and actuation means (55, 67, 71, 72, 92) adapted to exert, in work position, an axial and longitudinal effort of traction applying them one against the other, so as to maintain them connected to each other.

2. Machine according to Clam 1, characterized in that the axial positioning means are constituted by a truncated boss (47), disposed on the inner end of one of said parts (11b), which is intended to be positioned in a cavity (45) of complementary shape made at the inner end of the other part (11a).

3. Machine according to one of Claims 1 or 2, characterized in that it comprises means (17, 19, 23) adapted to move the two parts (11a, 11b) apart from each other transversely, when one passes from work position to rest position.

4. Machine according to Claim 3, characterized in that it comprises means adapted to cause one of the parts of the active element to make a movement of transverse translation towards the outside when one passes from the work position to the rest position.

5. Machine according to one of the preceding Claims, characterized in that it comprises means (15a, 15b, 29a, 29b) adapted to cause each part (11a, 11b) of the active element (11) to make an upward pivoting movement, such that, in rest position, the two parts (11a, 11b) of the active element (11) are substantially vertical and disposed laterally on its front face.

6. Machine according to any one of the preceding Claims, characterized in that the active element is constituted by an endless screw (11).

7. Machine according to any one of the preceding Claims, characterized in that the active element is constituted by a pick-up.

8. Machine according to any one of the preceding Claims, characterized in that the inner end of one of the parts (11a) of the active element (11) terminates in gripping means (55, 65) adapted to grip, in work position, the inner end (49) of the other part (11b) of the active element (11) and to exert thereon an axial traction effort, so as to ensure connection of said two parts (11a, 11b).

9. Machine according to one of the preceding Claims, characterized in that each part (11a, 11b) of the active element (11) is hollow, at least at its outer end, and comprises a first, axial, tubular, cylindrical element (39a, 39b) fast, at its inner end, with a disc (43a, 43b) fast with the latter which is fitted in roller bearings (37a, 37b) held by a second tubular element (35a, 35b) of larger diameter whose outer end is fast with a chassis element (33a, 33b) ensuring hold of the active element (11).

10. Machine according to Claim 9, characterized in that the gripping element is actuated by control means which traverse the first tubular element (39a, 39b), to emerge at one end of the active element (11).

11. Machine according to Claim 8, characterized in that the effort of traction is ensured by control means constituted by a longitudinal shaft (65) which traverses part (11a) of the active element (11) which contains the gripping means, and emerges therefrom via its outer end.

12. Machine according to Claim 8, characterized in that the inner end of a part (11b) of the active element (11) terminates in a cylindrical axial lug (99) provided with a circular groove (51) and the gripping means are constituted by claws (55) in two parts (50, 59) mounted to pivot about a pin (57), one part (59) forming hook being adapted to engage in the circular groove (51) under the action of said actuation means.

13. Machine according to Claim 1 or 2, characterized in that each part (11a, 11b) of the active element (11) is provided with an outer flange (90a, 90b) comprising pressure means (92), such as in particular bolts adapted to apply the two flanges (90a, 90b) against each other, in work position.

14. Machine according to Claim 1 or 2, characterized in that one of the parts (11b) of the active element (11) comprise a spindle (94) provided at one of its ends with a threaded part (96) and at its other end with a stop (100), the other part (11a) of the active element (11) being provided with a threaded orifice intended to receive, in locking position, the threaded part (96) so as to apply, in this position, the stop (100) against the part (11b), so as to exert an axial effort maintaining these two parts (11a, 11b) against each other.
